# EUROPEAN PATENT APPLICATION

(11) **EP 4 819 426 A1**
(43) Date of publication of application: **07.10.2026**
(21) Application number: 26165874.4
(22) Date of filing: 18.03.2026
(51) Int. Cl.: H02J 3/008, H02J 3/00, H02J 3/17, H02J 3/38

(54) **POWER MANAGEMENT SYSTEM, AND POWER MANAGEMENT METHOD**

(30) Priority: 31.03.2025 JP 2025059072
(71) Applicant: Toyota Jidosha Kabushiki Kaisha, Toyota-shi, Aichi-ken 471-8571 (JP)
(72) Inventor: MIYAZAKI, Taiki, TOYOTA-SHI, AICHI-KEN, 471-8571 (JP); NARITA, Kohei, TOYOTA-SHI, AICHI-KEN, 471-8571 (JP)
(74) Representative: Cabinet Beau de Loménie

(57) **Abstract**

A power management system (100) includes a control target device (30) connected to an electric power network, a server (10) that generates a control plan for the control target device (30) and generates a control command that is based on the control plan, and a controller (20) that controls the control target device (30). The controller (20) includes a memory (21) that stores the control plan and a circuitry. The circuitry detects a state in which a control command is unable to be received from the server (10) as a communication abnormality state. When the communication abnormality state has not been detected, the circuitry relays the control command received from the server (10) to the control target device (30) to control the control target device (30). When the communication abnormality state has been detected, the circuitry generates a control command based on the control plan stored in the memory (21) to control the control target device (30) using the generated control command.

## Description

### BACKGROUND

### 1. Field

The present disclosure relates to a power management system and a power management method.

### 2. Description of Related Art

JP2019-058007A discloses a power management system that controls an electric power network connected to a renewable-energy power generation facility and multiple energy storage facilities. An aggregator uses the power management system to receive, without modification, the output control that a power producer has received from an electric utility. The aggregator then causes the respective energy storage facilities in the electric power network to bear an amount V2, which is a portion of a required capacity V1 for the output control. In addition, the aggregator uses the power management system to distribute the remaining amount V3 (V3 = V1 - V2) to the power producer. The power management system reduces the output-control burden on the power generation facility.

The system is configured on the assumption that the aggregator sends a power management command to the power producer. Communication abnormalities may occur between the aggregator and the power producer. In such a case, the power management command cannot be transmitted from the aggregator to the power producer, resulting in power management being unable to be performed.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure provides a power management system configured to implement power management by controlling a control target device connected to an electric power network based on a control plan. The power management system includes a server configured to generate the control plan for the control target device and generate a control command that is based on the control plan and a controller configured to receive the control command from the server and control the control target device. The controller includes a memory configured to store the control plan received from the server, and a processor including circuitry. The circuitry is configured to detect a state in which the control command is unable to be received from the server as a communication abnormality state, when the communication abnormality state has not been detected, relay the control command received from the server to the control target device to control the control target device, and when the communication abnormality state has been detected, generate a control command based on the control plan stored in the memory to control the control target device using the generated control command.

Another aspect of the present disclosure provides a power management method executed, using a power management system, by controlling a control target device connected to an electric power network based on a control plan. The power management system includes a server configured to generate the control plan for the control target device and generate a control command that is based on the control plan and a controller configured to receive the control command from the server and control the control target device. The controller includes a memory configured to store the control plan received from the server. The method includes detecting a state in which the control command is unable to be received from the server as a communication abnormality state, when the communication abnormality state has not been detected, relaying the control command received from the server to the control target device to control the control target device, and when the communication abnormality state has been detected, generating a control command based on the control plan stored in the memory to control the control target device using the generated control command.

Other features and aspects will be apparent from the following detailed description, the drawings, and the claims.

### BRIEF DESCRIPTION OF THE DRAWINGS

Fig. 1 is a diagram illustrating the components of a power management system according to an embodiment.
Fig. 2 is a block diagram illustrating the relationship between a controller and each of multiple control target devices included in the power management system of Fig. 1.
Fig. 3 is a flowchart illustrating the flow of processes executed by the server.
Fig. 4 is a flowchart illustrating the flow of processes executed by the controller.
Fig. 5 is a flowchart illustrating the flow of processes executed by the controller depending on whether a user operation has been performed.
Fig. 6 is a sequence diagram illustrating the processing of the power management system when the communication state between the server and the controller is normal.
Fig. 7 is a sequence diagram illustrating the processing of the power management system when the communication state between the server and the controller is abnormal.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

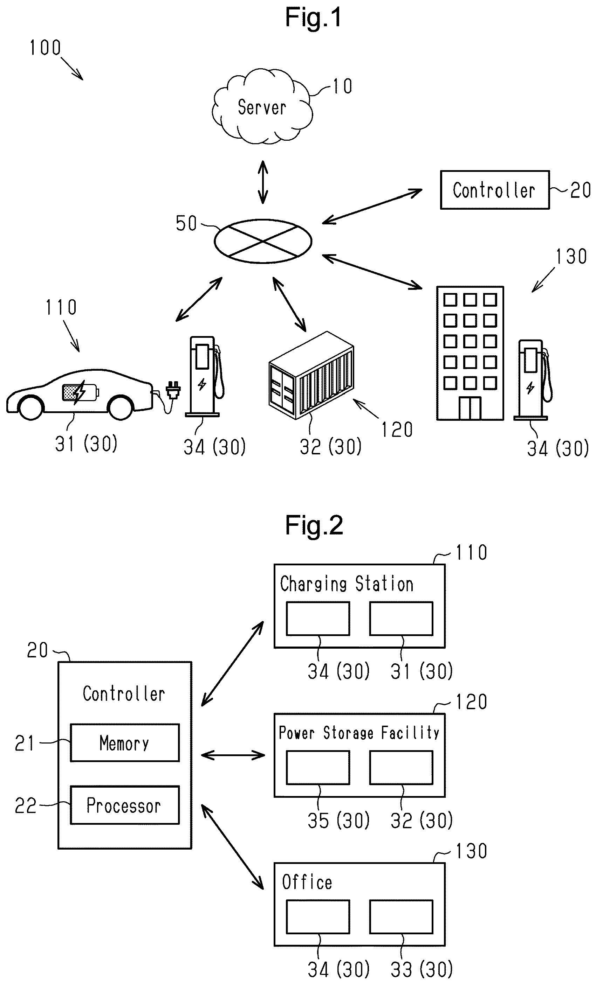

An embodiment of a power management system will now be described with reference to Figs. 1 to 7.

### Power Management System 100

First, an overall configuration of a power management system 100 will be described with reference to Fig. 1. As shown in Fig. 1, the power management system 100 includes a server 10 and a controller 20. The power management system 100 is configured to enable mutual communication between these components and control target devices 30 via a network 50.

In the example illustrated in Fig. 1, the control target devices 30 are installed in a charging station 110, a power storage facility 120, and an office 130. Each control target device 30 is connected to an electric power network.

The server 10 formulates a control plan for power management. Then, the server 10 generates control commands for controlling the control target devices 30 based on the control plan. The server 10 transmits the formulated control plan to the controller 20. The server 10 also transmits a control command to the controller 20. The controller 20 receives the control plan from the server 10 and stores the control plan. The controller 20 transmits the received control command to designated ones of the control target device 30, thereby controlling the control target devices 30. The control target device 30 operates in accordance with the control command received from the controller 20. The power management system 100 controls the control target devices 30 based on the control plan. Thus, power management for the electric power network is implemented to optimize power operation efficiency in microgrids and in facilities equipped with the control target devices 30.

Fig. 1 illustrates a battery electric vehicle 31, a storage battery 32, and a charging/discharging device 34 as examples of the control target device 30.

### Relationship Between Controller 20 and Control Target Devices 30

As shown in Fig. 2, the controller 20 includes a memory 21 and a processor 22. The functional configuration of the controller 20 is implemented by a CPU reading out a program stored in a ROM and executing the program using a RAM as a working area. Upon receiving the control plan from the server 10, the controller 20 stores the control plan in the memory 21.

The processor 22 is configured to relay a control command generated by the server 10 to each control target device 30. The processor 22 is further configured to generate a control command for controlling each control target device 30 based on the control plan stored in the memory 21. In this manner, the processor 22 is configured to control the control target device 30 using the control command generated by the server 10 or the control command generated based on the control plan stored in the memory 21. The processor 22 monitors a communication state between the controller 20 and the server 10. For example, the processor 22 detects, as a communication abnormality state, a state in which a control command generated by the server 10 does not reach the controller 20 at the time of transmitting the control command. Fig. 2 illustrates an example in which the controller 20 is installed separately from the control target devices 30; however, the controller 20 may be installed integrally with the control target devices 30.

Each control target device 30 operates based on a control command received from the controller 20. Fig. 2 illustrates, as examples of the control target device 30, the battery electric vehicle 31, the storage battery 32, the air conditioner 33, the charging/discharging device 34, and the power generation system 35. In the example shown in Fig. 2, the battery electric vehicle 31 and the charging/discharging device 34 are arranged in the charging station 110. In the example shown in Fig. 2, the storage battery 32 and the power generation system 35 are arranged in the power storage facility 120. In the example shown in Fig. 2, the air conditioner 33 and the charging/discharging device 34 are arranged in the office 130.

The battery electric vehicle 31 functions as a bidirectional power supply device that enables power supply to an electric power network and a home by utilizing vehicle-to-grid (V2G) and vehicle-to-home (V2H) technologies. The charging station 110 is connected to the electric power network. The charging/discharging device 34 includes a cable connected to the battery electric vehicle 31. The charging/discharging device 34 performs charging to the battery electric vehicle 31 connected by the cable and discharging from the battery electric vehicle 31 connected by the cable to the electric power network. The battery electric vehicle 31 receives a control command from the controller 20 and controls charging and discharging in accordance with the control command. The charging/discharging device 34 may receive a control command from the controller 20 and control charging and discharging in accordance with the control command.

The storage battery 32 stores electrical energy and supplies power to other electrical devices as necessary. The power storage facility 120 includes the power generation system 35 in addition to the storage battery 32. The power storage facility 120 is connected to the electric power network. Examples of the power generation system 35 include a photovoltaic power generation system and a wind power generation system. The storage battery 32 receives a control command from the controller 20 and controls power generation in accordance with the control command.

The air conditioner 33 is an example of a power-consuming device; however, the present disclosure is also applicable to other power-consuming devices such as lighting devices. The office 130 includes the charging/discharging device 34 in addition to the air conditioner 33. The power-consuming device such as the air conditioner 33 receives a control command from the controller 20, and controls an operating state of the power-consuming device in accordance with the control command.

Each control target device 30 is configured to receive an operation performed by a user. For example, the user is able to operate the control target device 30 using a smartphone, a tablet, or another mobile terminal connected to the control target device 30 for communication. In addition, the control target device 30 may include an interface that receives an operation performed by the user. In this case, the user is able to operate the control target device 30 by operating the interface.

### Flow of Processes Executed by Server 10

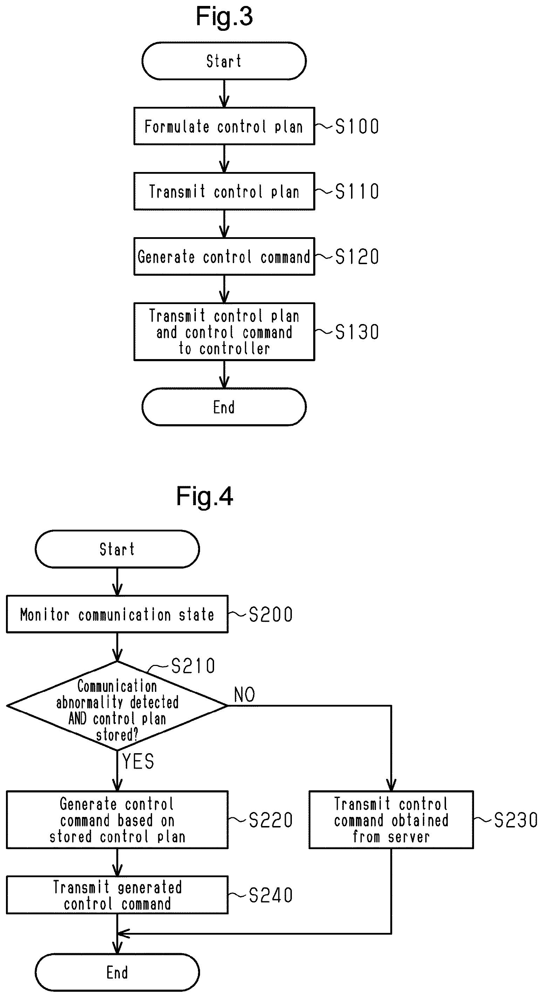

A flow of processes executed by the server 10 will now be described with reference to Fig. 3. The server 10 periodically executes the series of processes.

Upon starting the series of processes, the server 10 first formulates a control plan in step S100. The server 10 formulates a control plan based on information such as a current operating status of each control target device 30, a future operation forecast of each control target device 30, and a prediction result of power supply and demand in the electric power network. For example, the server 10 formulates, at 30-minute intervals, a control plan for each control target device 30 for the next 48 hours. That is, in this case, the control plan is updated every 30 minutes. Then, the server 10 proceeds to step S110, and transmits the control plan formulated in step S100 to the controller 20 in the process of step S110. Next, the server 10 proceeds to step S120. In the process of step S120, the server 10 generates a control command that is based on the control plan formulated in step S100. Further, the server 10 proceeds to step S130. In the process of step S130, the server 10 transmits the control command generated in step S120 to the controller 20. Thus, the server 10 terminates the series of processes.

### Flow of Processes Executed by Controller 20

Upon receiving the control plan from the server 10, the controller 20 stores the control plan in the memory 21. Upon receiving the control command from the server 10, the controller 20 transmits the control command to a designated one of the control target devices 30.

The processor 22 of the controller 20 periodically executes a series of processes shown in Fig. 4. Upon starting the series of processes shown in Fig. 4, the processor 22 first monitors the communication state between the controller 20 and the server 10 in step S200. Then, the processor 22 proceeds to step S210. In the process of step S210, the processor 22 determines whether a communication abnormality state has been detected between the controller 20 and the server 10. As described above, for example, the processor 22 detects, as the communication abnormality state, a state in which a control command generated by the server 10 does not reach the controller 20 at the time of transmitting the control command.

In step S210, when the communication abnormality state is detected and the control plan is stored in the memory 21 (step S210: YES), the processor 22 proceeds to step S220. Next, in the process of step S220, the processor 22 generates a control command based on the control plan stored in the memory 21. Further, the processor 22 proceeds to step S240. In the process of step S240, the processor 22 transmits the control command generated in step S220 to the control target device 30. As described above, the controller 20 is configured to control the control target device 30 by using the control command that is based on the control plan stored in the memory 21. The processor 22 performs the processes of steps S220 and S240 only when the control plan for the control target device 30 is stored in the memory 21. It should be understood that when the control plan for the control target device 30 is not stored in the memory 21, the control target device 30 does not have to be controlled.

When the communication abnormality state is not detected in step S210 (step S210: NO), the processor 22 proceeds to step S230. Next, in the process of step S230, the processor 22 relays the control command received from the server 10 to the control target device 30. Thus, the controller 20 terminates the series of processes.

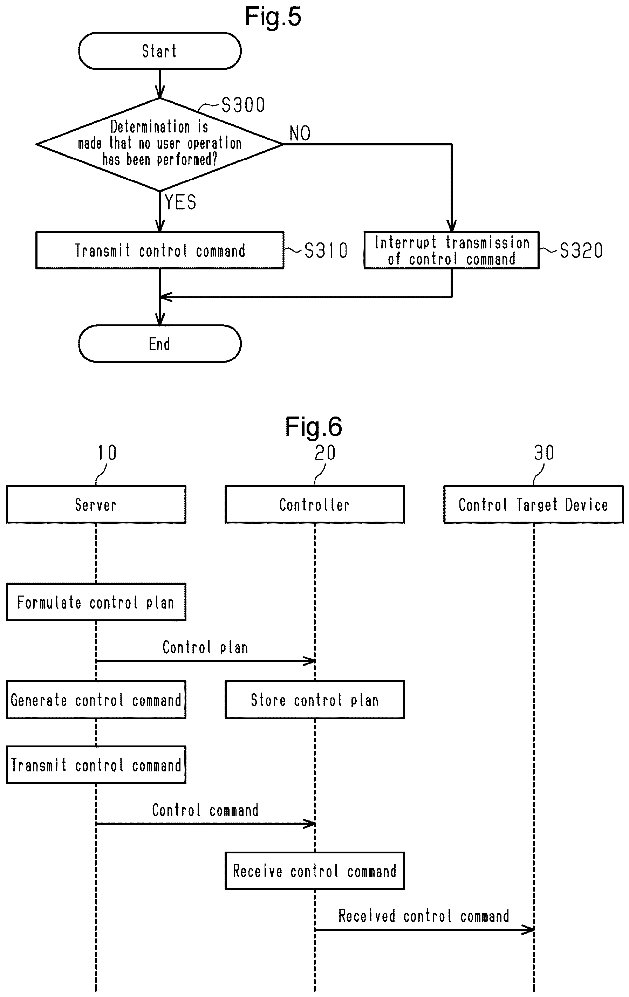

When a communication abnormality is detected and a control command is generated, the processor 22 periodically executes a series of processes illustrated in Fig. 5. That is, the series of processes illustrated in Fig. 5 is executed when the processor 22 controls multiple control target devices 30 using the control commands generated based on the control plan stored in the memory 21.

Upon starting the series of processes illustrated in Fig. 5, the processor 22 first determines whether no user operation has been performed on a control target device 30 in step S300. A user operation refers to an operation performed by a user on a control target device 30. When a user operates a control target device 30, it is determined that a user operation has been performed. When a user has not operated a control target device 30, it is determined that a user operation has not been performed.

When determining that no user operation has been performed (step S300: YES), the processor 22 proceeds to step S310. In the process of step S310, the processor 22 transmits a control command to the control target device 30.

When determining that a user operation has been performed (step S300: NO), the processor 22 proceeds to step S320 and interrupts the transmission of the control command. When the controller 20 interrupts the transmission of the control command, multiple control target devices 30 will not be controlled in accordance with the control plan. When a control target device 30 is operated in accordance with user operation, the status of power supply and demand in the electric power network is different from that in the control plan stored in the memory 21. Thus, in this case, the control in multiple control target devices 30 according to the stored control plan is interrupted.

After executing the process of step S310 or S320, the processor 22 terminates the series of processes illustrated in Fig. 5.

### Processing of the Embodiment

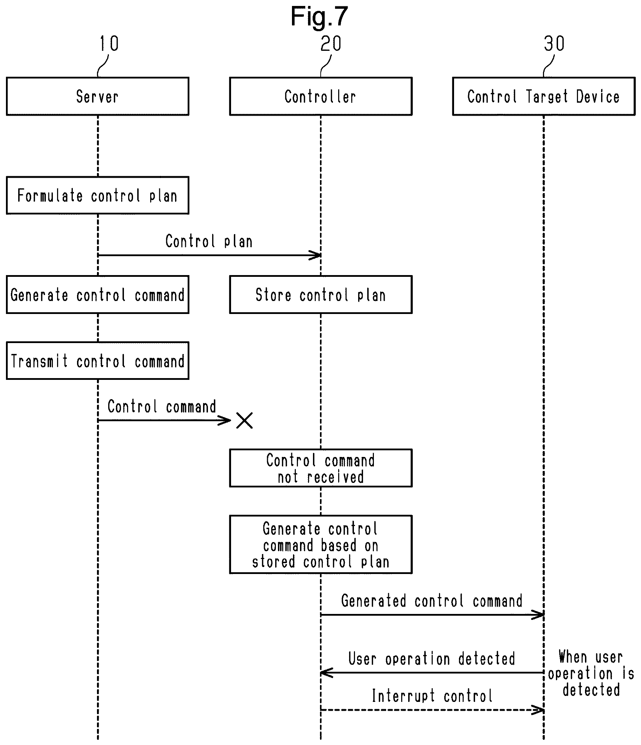

The processing of the embodiment will be described with reference to Figs. 6 and 7.

Fig. 6 shows the processing of the power management system 100 when the communication state between the server 10 and the controller 20 is normal. As illustrated in Fig. 6, the server 10 formulates a control plan for the control target device 30. Then, the server 10 transmits the formulated control plan to the controller 20. The controller 20 stores the control plan received from the server 10. Then, the server 10 generates a control command that is based on the formulated control plan. Subsequently, the server 10 transmits the generated control command to the controller 20. The controller 20 controls the control target device 30 by relaying and transmitting the control command received from the server 10 to the control target device 30.

Fig. 7 shows the processing of the power management system 100 when the communication state between the server 10 and the controller 20 is abnormal. As illustrated in Fig. 7, the server 10 formulates a control plan for the control target device 30. Then, the server 10 transmits the formulated control plan to the controller 20. The controller 20 stores the control plan received from the server 10. Then, the server 10 generates a control command that is based on the formulated control plan. Subsequently, the server 10 transmits the generated control command to the controller 20. However, in the example illustrated in Fig. 7, at the time of transmitting the control command generated by the server 10, the control command does not reach the controller 20. After detecting the occurrence of the communication abnormality, the controller 20 generates a control command based on the control plan stored in the memory 21. Then, the controller 20 controls the control target device 30 using the generated control command.

If the user operates the control target device 30, the controller 20 interrupts the control of the control target device 30 without transmitting the generated control command.

### Operation of the Present Embodiment

In the power management system 100, the controller 20 relays communication between the server 10 and a control target device 30 to monitor the communication state between the control target device 30 and the server 10. Further, in the power management system 100, the controller 20 generates a control command based on the control plan stored in the memory 21 upon detecting a communication abnormality state, in which a control command cannot be received from the server 10. Furthermore, the controller 20 controls the control target device 30 using the generated control command.

### Advantages of the Present Embodiment

(1) The power management system 100 allows the control of a control target device 30 to be continued in accordance with the control plan stored in the controller 20 even when a control command from the server 10 is interrupted. This allows the power management system 100 to prevent interruption of power management even in an unstable communication state.
(2) In the power management system 100, the processor 22 determines whether a user operation has been performed on a control target device 30 upon detecting a communication abnormality state. When a user operation is performed, the processor 22 interrupts the control of the control target device 30. Only when no user operation is performed, the processor 22 controls the control target device 30.
   When a user operation is performed, the power management system 100 allows a control target device 30 to operate with priority given to the user operation.
(3) In the power management system 100, the processor 22 detects, as the communication abnormality state, a state in which the control command based on the control plan stored in the memory 21 has not been received from the server 10 despite the time for transmitting the control command having arrived.

In the power management system 100, the processor 22 of the controller 20 monitors the communication state with reference to the time of transmitting the control command in the control plan stored in the memory 21. This allows the controller 20 to promptly detect the occurrence of a communication abnormality.

When the communication between the controller 20 and the server 10 is interrupted, the power management system 100 is permitted to quickly shift to control in the communication abnormality state. This limits a delay in the control of the power management system 100.

### Modifications

The present embodiment may be modified as follows. The present embodiment and the following modifications can be combined as long as the combined modifications remain technically consistent with each other.

In the above embodiment, the processor 22 detects, as the communication abnormality state, a state in which a control command based on the control plan stored in the memory 21 has not been received. Instead, the processor 22 may detect, as the communication abnormality state, a state in which a delay of a reception time at which a control command based on the control plan is received from the server 10 relative to a transmission time for the control command reaches or exceeds a predetermined duration. The predetermined duration may be set to, for example, 10 or 15 minutes.

This configuration allows the power management system 100 to detect, as the communication abnormality state, a state in which the communication delay is relatively large due to a relatively low quality of communication between the server 10 and the controller 20. Thus, the power management system 100 reduces unnecessary processing in the controller 20 by detecting a communication abnormality state only when a delay exceeding the predetermined duration occurs.

The series of processes described with reference to Fig. 5 do not have to be executed. The series of processes described with reference to Fig. 5 may be omitted. In this case, the processor 22 continues the control of multiple control target devices 30 according to the control plan stored in the memory 21 regardless of whether a user operation has been performed.

The processor 22 is not limited to a device including circuitry that includes a CPU and a ROM and executes software processing. That is, the processor 22 may be modified if it has any one of the following configurations (a) to (c).
(a) The processor 22 includes one or more processors that execute various processes in accordance with a computer program. The processor includes a CPU and a memory, such as a RAM and ROM. The memory stores program codes or instructions configured to cause the CPU to execute the processes. The memory, or a computer-readable medium, includes any type of medium that is accessible by general-purpose computers and dedicated computers.
(b) The processor 22 includes one or more dedicated hardware circuits that execute various processes. Examples of the dedicated hardware circuits include an application specific integrated circuit (ASIC) and a field programmable gate array (FPGA).
(c) The processor 22 includes a processor that executes part of various processes in accordance with a computer program and a dedicated hardware circuit that executes the remaining processes.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A power management system (100) configured to implement power management by controlling a control target device (30) connected to an electric power network based on a control plan, the power management system (100) comprising:
a server (10) configured to generate the control plan for the control target device (30) and generate a control command that is based on the control plan; and
a controller (20) configured to receive the control command from the server (10) and control the control target device (30), wherein
the controller (20) includes:
a memory (21) configured to store the control plan received from the server (10); and
a processor (22) including circuitry, and
the circuitry is configured to:
detect a state in which the control command is unable to be received from the server (10) as a communication abnormality state;
when the communication abnormality state has not been detected, relay the control command received from the server (10) to the control target device (30) to control the control target device (30); and
when the communication abnormality state has been detected, generate a control command based on the control plan stored in the memory (21) to control the control target device (30) using the generated control command.

2. The power management system (100) according to claim 1, wherein
the circuitry is configured to determine whether a user operation has been performed on the control target device (30) upon detecting the communication abnormality state, and
the circuitry is further configured to:
when the user operation has been performed, interrupt control of the control target device (30); and
when the user operation has not been performed, control the control target device (30).

3. The power management system (100) according to any of claims 1 to 2, wherein
the circuitry is configured to detect, as the communication abnormality state, a state in which the control command based on the control plan stored in the memory (21) has not been received from the server (10) despite a time for transmitting the control command having arrived.

4. The power management system (100) according to any of claims 1 to 3, wherein
the circuitry is configured to detect, as the communication abnormality state, a state in which a delay of a reception time at which the control command that is based on the control plan stored in the memory (21) is received from the server (10) relative to a transmission time for the control command reaches or exceeds a predetermined duration.

5. A power management method executed, using a power management system (100), by controlling a control target device (30) connected to an electric power network based on a control plan, the power management system (100) including a server (10) configured to generate the control plan for the control target device (30) and generate a control command that is based on the control plan and a controller (20) configured to receive the control command from the server (10) and control the control target device (30), wherein the controller (20) includes a memory (21) configured to store the control plan received from the server (10), the method comprising:
detecting a state in which the control command is unable to be received from the server (10) as a communication abnormality state;
when the communication abnormality state has not been detected, relaying the control command received from the server (10) to the control target device (30) to control the control target device (30); and
when the communication abnormality state has been detected, generating a control command based on the control plan stored in the memory (21) to control the control target device (30) using the generated control command.
